# DEMANDE DE BREVET EUROPEEN

(11) **EP 0 867 326 A1**
(43) Date de publication de la demande: **30.09.1998**
(21) Numéro de dépôt: 98400626.2
(22) Date de dépôt: 17.03.1998
(51) Int. Cl.: B60K 37/06, B60H 1/00

(54) **Tableau de commande à came et à levier pour chauffage de véhicule**

(30) Priorité: 20.03.1997 FR 9703428
(71) Demandeur: AFE Plasturgie, 95580 Andilly (FR)
(72) Inventeur: Lignereux, Jean-Pierre, 72230 Guecelard (FR)
(74) Mandataire: Rousset, Jean-Claude

(57) **Abrégé**

La came (11) solidaire d'un bouton de manoeuvre (7) et le levier (20) entraîné par cette came sont disposés respectivement en avant et en arrière de la platine (2) constituant le fond du boîtier du tableau de commande, ce qui permet de rapprocher l'un de l'autre leurs axes respectifs (9, 23) et de réduire l'encombrement de l'ensemble.

L'invention s'applique notamment à la commande de la position d'un volet de réglage d'un flux d'air dans une installation de chauffage ou de climatisation de véhicule.

## Description

L'invention concerne un tableau de commande, notamment pour installation de chauffage/ventilation ou de climatisation de véhicule, comprenant un boîtier présentant une paroi avant ou façade et une paroi arrière ou platine, un bouton de manoeuvre monté sur la façade de manière à tourner autour d'un premier axe orienté sensiblement de l'avant vers l'arrière, un levier monté sur la platine de manière à pivoter autour d'un second axe sensiblement parallèle au premier axe, le levier s'étendant sensiblement radialement à partir du second axe, en regard de la face arrière de la platine, un pion solidaire du levier faisant saillie par rapport à celui-ci, à distance du second axe et sensiblement parallèlement à ce dernier, et s'engageant dans un chemin de came formé dans une came solidaire en rotation du bouton de manière à transformer le mouvement de rotation du bouton en un mouvement de pivotement prédéterminé du levier.

On désigne ici par "paroi avant" la paroi du boîtier tournée vers l'utilisateur du tableau de commande, et les termes "avant" et "arrière" se réfèrent à cette convention. Il est à noter que, dans le cas d'un tableau de commande de chauffage de véhicule, la paroi avant est généralement tournée vers l'arrière du véhicule.

Dans les tableaux de commande de ce genre, le levier sert par exemple à commander le déplacement d'au moins un volet pour le réglage d'un flux d'air dans une installation de chauffage/ventilation ou de climatisation, à chaque position du bouton de manoeuvre devant correspondre une position bien déterminée du volet.

Dans les tableaux de commande connus, la came est disposée, comme le levier, en arrière de la platine. Le levier doit alors être suffisamment éloigné de la platine pour que la came se loge axialement entre ceux-ci. De plus, l'arbre par l'intermédiaire duquel le levier est monté sur la platine, qui peut être solidaire de la platine ou du levier est nécessairement disposé au-delà du bord périphérique de la came par rapport au premier axe. Ces deux contraintes ont une incidence sur l'encombrement de l'ensemble came-levier, et par conséquent du tableau de commande dans son ensemble, à la fois en surface et dans la direction axiale ou avant-arrière.

Le but de l'invention est de réduire cet encombrement.

L'invention vise notamment un tableau de commande du genre défini en introduction, et prévoit que la came est disposée à l'intérieur du boîtier.

Le levier peut ainsi être rapproché de la platine, ce qui entraîne une diminution de l'encombrement axial.

Des caractéristiques optionnelles de l'invention, complémentaires ou alternatives, sont énoncées ci-après:
- Le levier est monté sur la platine par l'intermédiaire d'un arbre, la distance entre les premier et second axes étant inférieure à la somme des encombrements radiaux de la came et de l'arbre. Le second axe est ainsi rapproché du premier axe, ce qui en soi réduit l'encombrement en surface. De plus, ce rapprochement permet, pour un même débattement angulaire du levier, de réduire le diamètre de la came, amplifiant ainsi cette diminution d'encombrement.
- La came est interposée entre la platine et une plaque intermédiaire disposée sensiblement perpendiculairement au premier axe à l'intérieur du boîtier, la face arrière de la plaque intermédiaire et la face avant de la came portant respectivement des pistes électriques et des éléments de contact électrique propres à venir en contact avec les pistes pour établir un circuit électrique de configuration variable en fonction de la position en rotation du bouton.

Il est souvent nécessaire de commander, en même temps que la position d'un volet, l'alimentation d'un élément électrique. Dans ce cas, l'invention permet de faire jouer à la came le rôle de support d'éléments de contact électrique, ce qui diminue en outre le nombre de composants du tableau de commande.

Les caractéristiques et avantages de l'invention seront exposés plus en détail dans la description ci-après, en se référant aux dessins annexés, sur lesquels:
- la figure 1 est une vue partielle d'un tableau de commande selon l'invention, en coupe par le plan contenant les axes de deux boutons rotatifs;
- la figure 2 est une vue partielle d'arrière du tableau de commande; et
- la figure 3 est une vue partielle en coupe selon la ligne III-III de la figure 2.

Le tableau de commande représenté sur les figures comprend un boîtier formé de deux pièces principales, à savoir une pièce 1 ayant la forme générale d'un bac à contour rectangulaire, présentant un fond généralement plan 2 appelé ci-après platine, deux parois longitudinales opposées 3 et 4 et deux parois d'extrémités dont l'une est représentée sous la référence 5. La seconde pièce 6, appelée ci-après façade, constitue un couvercle fermant le bac 1 et assemblée aux parois longitudinales et d'extrémités de celui-ci, par exemple par soudage aux ultrasons.

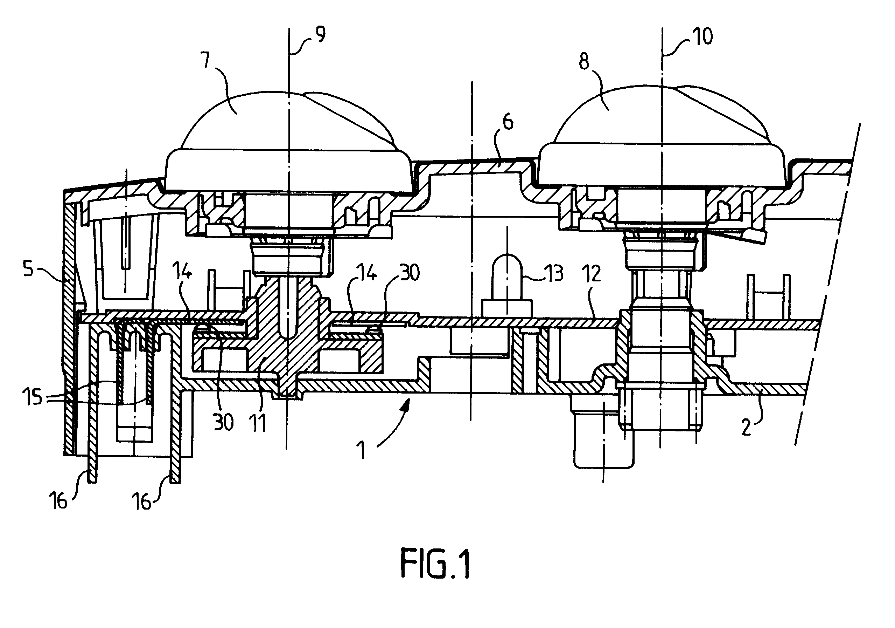

La figure 1 montre deux boutons de manoeuvre 7 et 8 montés de façon classique sur la façade 6 de manière à être manoeuvrés par un utilisateur pour tourner autour d'axes respectifs 9 et 10 perpendiculaires au plan général de la platine 2. Les boutons 7 et 8 sont mutuellement alignés dans la direction longitudinale du boîtier, le bouton 7 étant proche de la paroi d'extrémité 5 de celui-ci. Un troisième bouton non représenté peut être disposé au-delà du bouton 8, au voisinage de la paroi d'extrémité opposée. Le bouton 7 est solidaire en rotation d'une came 11 qui, selon l'invention, est disposée à l'intérieur du boîtier, et plus précisément entre la platine 2 et une plaque intermédiaire 12 s'étendant sensiblement parallèlement au plan général de la platine. La plaque 12, connue en elle-même, porte sur sa face avant, tournée vers la façade 6, une source de lumière 13 servant à l'éclairage de la façade, et, sur sa face arrière, des pistes électriques 14 reliées à une multiplicité de broches de connexion 15 s'étendant vers l'arrière à partir de la plaque 12. L'ensemble des broches 15 est entouré par une jupe annulaire 16 appartenant à la pièce 1 du boîtier, définissant un logement pour un connecteur femelle non représenté destiné au raccordement électrique du tableau de commande.

La came 11 est guidée en rotation dans des paliers formés sur la platine 2 et sur la plaque 12. Elle présente la forme d'un disque relativement épais dans l'épaisseur duquel est ménagée, à partir de sa face arrière, une gorge 17 allongée selon un parcours curviligne. Dans l'exemple illustré, ce parcours comprend deux régions extrêmes disposées selon des arcs de cercle de rayons différents autour de l'axe 9, raccordées entre elles par une région intermédiaire. La gorge 17 reçoit un pion cylindrique 18 faisant saillie vers l'avant, selon un axe 19 parallèle à l'axe 9, à partir d'un levier 20 disposé en regard de la face arrière de la platine 2. Le levier 20 est solidaire d'un moyeu 21 guidé en rotation sur un arbre creux 22 dont l'axe 23 est également parallèle à l'axe 9, le levier s'étendant radialement à partir du moyeu 21. L'arbre creux 22 fait partie de la pièce 1 et est formé par moulage à partir de la platine 2.

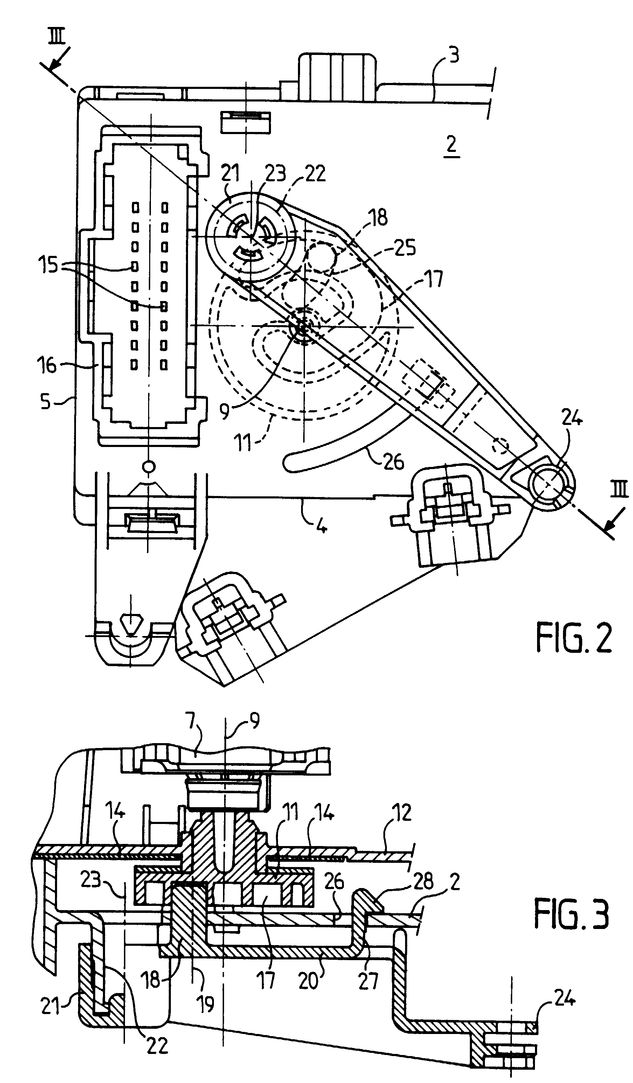

Pendant une partie de la course de rotation du bouton 7, le pion 18 se trouve dans la région terminale en arc de plus grand rayon de la gorge 17, comme montré sur la figure 2, et le levier reste dans une première position angulaire. Dans une autre partie de la course du bouton, le pion 18 se trouve dans la région de raccordement de la gorge 17, et la rotation du bouton s'accompagne d'un pivotement du levier jusqu'à une seconde position correspondant à la région en arc de plus petit rayon de la gorge, position dans laquelle le levier est maintenu pendant le reste de la course du bouton. L'extrémité libre 24 du levier est reliée de façon connue, par exemple par l'intermédiaire d'un câble, à un volet de manière à déplacer celui-ci entre deux positions correspondant respectivement aux première et seconde positions du levier. Une ouverture 25 allongée en arc de cercle est ménagée dans la platine 2 pour permettre le passage du pion 18. Une autre ouverture 26 allongée en arc de cercle, plus éloignée de l'axe 23 que l'ouverture 25, permet le passage d'une patte 27 solidaire du levier 20 et s'étendant vers l'avant à partir de celui-ci, terminée par une saillie radiale 28 qui prend appui sur la face avant de la platine 2 pour limiter la flexion vers l'arrière du levier.

Les figures 2 et 3 montrent que la distance entre les axes 9 et 23 est inférieure à la somme des rayons de l'arbre 22 et de la came 11, c'est-à-dire que ces deux éléments se superposent partiellement dans la vue selon la figure 2, ce qui ne serait pas possible si la came se trouvait en arrière de la platine 2.

On voit sur la figure 1 que des plots de contact électrique 30 destinés à venir en contact, de façon connue, avec les pistes 14 en fonction de la position angulaire du bouton 7, sont disposés sur la face avant de la came 11, ce qui dispense de prévoir un support séparé pour ces plots.

## Revendications

1. Tableau de commande, notamment pour installation de chauffage/ventilation ou de climatisation de véhicule, comprenant un boîtier présentant une paroi avant ou façade (6) et une paroi arrière ou platine (2), un bouton de manoeuvre (7) monté sur la façade de manière à tourner autour d'un premier axe (9) orienté sensiblement de l'avant vers l'arrière, un levier (20) monté sur la platine de manière à pivoter autour d'un second axe (23) sensiblement parallèle au premier axe, le levier s'étendant sensiblement radialement à partir du second axe, en regard de la face arrière de la platine, un pion (18) solidaire du levier faisant saillie par rapport à celui-ci, à distance du second axe et sensiblement parallèlement à ce dernier, et s'engageant dans un chemin de came (17) formé dans une came (11) solidaire en rotation du bouton de manière à transformer le mouvement de rotation du bouton en un mouvement de pivotement prédéterminé du levier, caractérisé en ce que la came est disposée à l'intérieur du boîtier.

2. Tableau de commande selon la revendication 1, dans lequel le levier est monté sur la platine par l'intermédiaire d'un arbre (22), la distance entre les premier et second axes étant inférieure à la somme des encombrements radiaux de la came et de l'arbre.

3. Tableau de commande selon l'une des revendications 1 et 2, dans lequel la came est interposée entre la platine et une plaque intermédiaire (12) disposée sensiblement perpendiculairement au premier axe à l'intérieur du boîtier, la face arrière de la plaque intermédiaire et la face avant de la came portant respectivement des pistes électriques (14) et des éléments de contact électrique (30) propres à venir en contact avec les pistes pour établir un circuit électrique de configuration variable en fonction de la position en rotation du bouton.
